# FASCICULE DE BREVET EUROPEEN

(11) **EP 2 780 763 B1**
(45) Date de publication et mention de la délivrance du brevet: **01.05.2019**
(21) Numéro de dépôt: 12795537.5
(22) Date de dépôt: 13.11.2012
(51) Int. Cl.: G03B 15/07, G03B 13/36, H04N 5/232

(54) **PROCEDE ET SYSTEME DE CAPTURE DE SEQUENCE D'IMAGES AVEC COMPENSATION DES VARIATIONS DE GRANDISSEMENT**
VERFAHREN UND SYSTEME ZUR AUFNAHME VON BILDFOLGEN MIT KOMPENSATION DER VERGRÖSSERUNGSARIATIONEN
METHOD AND SYSTEM FOR CAPTURING IMAGE SEQUENCES WITH COMPENSATION FOR VARIATIONS IN MAGNIFICATION

(30) Priorité: 14.11.2011 FR 1160333
(43) Date de publication de la demande: 24.09.2014
(73) Titulaire: Lens Correction Technologies, 75001 Paris (FR)
(72) Inventeur: CAO, Frédéric, F-92100 Boulogne-Billancourt (FR); GUICHARD, Frédéric, F-75012 Paris (FR)
(74) Mandataire: Cabinet Plasseraud
(86) Numéro de dépôt international: PCT/FR2012/052616
(87) Numéro de publication internationale: WO 2013/072618

(56) Documents cités:
- WO-A1-2011/018575
- GB-A- 2 170 373
- US-B1- 6 259 537
- US-B1- 6 373 992

## Description

La présente invention concerne un procédé et un système de capture de séquences d'images avec différentes valeurs de grandissement.

Un système de capture d'images (fixes ou animés) peut être un module apte à être utilisé dans un appareil photo, une caméra, un photophone ou caméraphone (téléphones mobiles aptes à capturer des photos ou vidéo), un endoscope, une caméra de surveillance, un jouet, un assistant personnel, un ordinateur ou une tablette numérique, une caméra thermique, un appareil d'échographie ou d'imagerie IRM (résonance magnétique), un appareil de radiographies à rayons X etc.

Un tel système de capture d'images comprend classiquement un capteur incluant une pluralité d'éléments photosensibles, appelés pixels, qui transforment une quantité de lumière reçue en valeurs numériques, et une optique pour focaliser la lumière vers le capteur.

Le capteur peut être par exemple un détecteur à transfert de charge CCD (Charged Coupled Device), un CMOS (Complementary Metal Oxyde Semiconductor), un CID (Charge Induced Device), un IRCCD (Infra-Red CCD), un ICCD (Intensified CCD), un EBCCD (Electron Bombarded CCD), un MIS (Metal Insulator Semiconductor), un APS (Active Pixel Sensor), un QWIP (Quantum Well Infrared Photodetectors), un MPQ (Multi-Puits Quantiques), un capteur sensible au spectre lumineux et/ou à d'autres bandes spectrales électromagnétiques ou autre. Il peut éventuellement être associé à un filtre de Bayer ou panchromatique afin d'obtenir une image couleur.

On connaît des systèmes de capture d'images comprenant une optique, un capteur d'images numériques et un module de mise ou point.

Par optique, on entend un système optique comprenant un ou plusieurs éléments parmi notamment des lentilles, des miroirs et/ou des éléments diffractifs. L'optique peut être à focale fixe (sans possibilité de zoom) ou à focale variable, c'est-à-dire incluant un mécanisme permettant de modifier la distance entre le capteur et l'optique afin d'introduire un zoom sur la scène à capturer.

Une optique à focale variable est généralement plus complexe, plus encombrante et plus chère qu'une optique à focale fixe. Il existe plusieurs sortes d'optiques à focale variable, les unes préservant le focus lors d'un changement de focale, et les autres ne préservant pas le focus lors d'un changement de focale (varifocale). Le choix de la valeur de focale d'une optique à focale variable est généralement effectué par l'utilisateur. Ainsi l'utilisateur peut choisir par exemple une focale courte (par exemple 24 mm de focale pour un capteur 24*36 mm²) pour capturer un monument proche, une focale moyenne pour un portrait (par exemple 100 mm de focale pour un capteur 24*36 mm²) et une focale longue pour capturer un objet lointain (par exemple 200 mm de focale pour un capteur 24*36 mm²). La variation de focale a pour effet au premier ordre de provoquer une variation de grandissement de l'image numérique globalement dans les mêmes proportions que la variation de focale. La variation de focale a pour effet au second ordre de provoquer une déformation de l'image numérique distincte de la variation de grandissement, la déformation n'étant pas exactement identique partout dans l'image numérique à cause de la distorsion de l'optique qui est fonction de la focale.

Le module de mise au point permet de faire varier le focus et est adapté pour régler la focalisation du système de manière à obtenir une image nette en une partie du champ image. Dans la présente description, les termes mise au point et focus sont utilisés indifféremment. Le module de mise au point peut être manuel ou automatique, on parle alors de module d'autofocus. Le module de mise au point est associé à une optique, qu'elle soit à focale variable (avec possibilité de zoom) ou à focale fixe (sans possibilité de zoom). Une variation de focus correspond à une variation de la tache de flou, i.e. variation la taille de l'image d'un point à travers l'optique sur le capteur. Une telle variation de focus peut induire au premier ordre une variation de grandissement de l'image numérique généralement beaucoup plus faible, bien que visible et distincte, de la variation de grandissement produite par une variation de focale de l'optique. Dans le cas particulier des optiques à focale variable de type varifocale, la variation de focale produit simultanément une variation de focus et donc, en faisant varier la focale, on obtient simultanément une première variation de grandissement due à la variation de focale et une seconde variation de grandissement due à la variation de focus. La variation de focus peut avoir pour effet au second ordre une déformation locale de l'image numérique distincte de la variation de grandissement, la déformation n'étant pas exactement identique partout dans l'image numérique à cause de la distorsion de l'optique qui est fonction du focus.

La mise au point peut être assurée par un système dit de « metering » qui peut inclure un télémètre et/ou par un système de détection de phase qui consiste à dévier une partie du flux lumineux vers deux capteurs et à mesurer le décalage entre les deux images pour déterminer la distance de l'objet. De tels systèmes de « metering » sont onéreux et encombrants et sont généralement réservés à des appareils haut de gamme.

En absence de système de metering, la mise au point peut être déterminée par itérations successives et mesures relatives,en parcourant différentes configurations accessibles avec le module d'autofocus et en mesurant en chacune de ces configurations un attribut de l'image tel que le contraste ou la netteté, par exemple pour une des composantes de couleur lorsqu'il s'agit d'une image couleur. On peut se référer par exemple au document FR-A-2 949 003 qui décrit un système et procédé de capture d'images avec différents modes de fonctionnement du module d'autofocus.

De tels systèmes de mise au point par itérations successives sont peu chers et de faible encombrement mais présentent l'inconvénient d'une mise au point lente car itérative. En particulier, lors d'une image hors focus, le module d'autofocus ne sait pas dans quel sens régler la focalisation du système optique avant une première itération.

Lors de la capture unique d'une image (photographie d'une scène), l'image est typiquement capturée une fois la mise au point effectuée. En revanche, lors de la capture d'une séquence d'images (vidéo), une variation de focalisation peut intervenir entre deux images successives d'une même séquence. Ceci produit une image floue et une variation de grandissement due à la variation de focus pendant un certain temps visible sur l'écran de l'appareil ainsi que sur un enregistrement vidéo.

L'invention concerne plus spécifiquement la capture de séquences d'images d'une scène avec des grandissements différents d'une image à l'autre. On entend par grandissement le rapport entre la taille de l'image d'un objet à travers le système optique et la taille réelle de l'objet. Une variation de grandissement peut provenir d'une variation de focale de l'optique lors d'un zoom avant ou arrière le cas échéant, ou d'une variation de focus sur une scène donnée.

Lors d'une variation de focus sur une scène à imager, il se produit un effet visuel communément appelé « pompage », ou « lens breathing » en anglais, provoqué par des variations de grandissement d'une image à l'autre d'une séquence. Cet effet visuel peut être particulièrement gênant dans certaines applications, notamment lors de la capture de séquences d'images vidéo pour des applications hautes définitions et/ou pour des applications 3D.

Le document US-A-2009/0066832 décrit un système d'acquisition d'une séquence d'images vidéo comprenant un dispositif pour contrôler la vitesse de déplacement du système optique de façon différente selon que l'image en cours d'acquisition est soumise ou non à un grandissement provoqué par un zoom électronique. Ce document propose d'assujettir le module d'autofocus au grandissement imposé par le zoom afin d'atténuer les effets visuels du zoom sur les variations de netteté. Le système décrit dans ce document ne permet pas de compenser les effets visuels de « pompage ».

Le document WO-A-2008/134234 décrit un système et procédé d'acquisition d'une séquence d'images vidéo dans lequel les images hors focus sont rejetées. Un tel système nécessite une forte capacité de prise de vues pour permettre le rejet pur et simple des images floues sans perte significative d'informations.

Le document US-A-2008/0187302 décrit un système d'acquisition d'une séquence d'images vidéo comprenant un second système optique contrôlé pour apporter une correction d'image dans le cas d'un mouvement d'un premier système optique. Un tel système permet un grandissement par zoom sans affecter l'état de focus de chaque image. Un tel système avec double optiques est cependant complexe et onéreux.

Certains appareils « reflexes » du commerce, par exemple Nikon D90® munis de systèmes de mise au point par détection de phase, désactivent le module d'autofocus pour la capture d'une image après mise au point. Une telle solution n'est pas acceptable pour la capture de séquences d'images vidéo car la mise au point n'est plus assurée en cas de changement de scène.

Plus récemment, ont été commercialisés des appareils « réflexes », par exemple les appareils de la série SLT de Sony®, qui maintiennent actif le système de mise au point par détection de phase pendant la capture d'une séquence vidéo. Néanmoins, la déviation d'une partie du flux lumineux vers les capteurs du système de mise au point entraine une diminution de l'exposition à la lumière du capteur d'image et peut provoquer une augmentation du bruit sur les images capturées. De plus, ces appareils restent soumis aux effets de pompage décrits plus haut,

Un système et procède conventionnels sont divulgués par WO 2011/018575 A1.

La présente invention vise à écarter certaines des limitations des techniques précitées. Plus spécifiquement, l'invention vise à compenser les effets visuels de « pompage » lors de l'acquisition d'une séquence d'images avec des variations de grandissement, par exemple provenant de variations de focus.

L'invention vise en outre à assurer une mise au point rapide et continue pour chaque image lors de l'acquisition d'une séquence d'images.

A cet effet, l'invention propose un procédé de capture d'une séquence d'images numériques selon la rev. indépendante 1, comprenant les étapes consistant à :
- imager une scène sur un capteur numérique à travers une optique, avec au moins une première valeur de grandissement et au moins une deuxième valeur de grandissement, la deuxième valeur de grandissement étant différente de la première valeur de grandissement et la variation entre lesdites valeurs de grandissement provenant d'une variation de focus de l'optique;
- capturer une première image numérique avec la première valeur de grandissement ;
- capturer une deuxième image numérique avec la deuxième valeur de grandissement ;
- déterminer une compensation numérique de la variation entre lesdites valeurs de grandissement ;
- appliquer un traitement numérique à la première image numérique et/ou à la deuxième image numérique en fonction de ladite compensation numérique déterminée.

Selon les modes de réalisation, le procédé de capture d'une séquence d'images numériques selon l'invention peut comprendre en outre une ou plusieurs des caractéristiques suivantes :
- un ou plusieurs paramètres de la compensation numérique de la variation de grandissement sont prédéterminés par calibration ;
- la compensation numérique de la variation de grandissement est déterminée en fonction d'une analyse numérique de la première image numérique et/ou de la deuxième image numérique ;
- le traitement numérique consiste à appliquer une variation corrective de grandissement à la première image numérique et/ou à la deuxième image numérique en fonction de ladite compensation numérique déterminée ;
- la première image numérique et la deuxième image numérique sont deux images consécutives de la séquence d'images numérique ;
- le focus varie d'une image à la suivante pour chaque image de la capture de la séquence d'images.

Selon un mode de réalisation, le procédé de capture d'une séquence d'images numériques selon l'invention comprend en outre une étape consistant à mesurer une netteté de chaque image capturée, et dans lequel la variation de focus d'une image à l'autre consiste à osciller autour d'une position de référence courantede focus, la position de référence courante de focus étant en outre ajustée en fonction de la netteté mesurée.

Le procédé de l'invention permet de compenser efficacement les effets visuels dus aux changements de grandissements entre deux images capturées successivement. Le procédé permet également d'assurer une mise au point en continu sur la scène à imager pour garantir une netteté optimale de chacune des images capturées.

L'invention concerne en outre un système de capture de séquences d'images numériques selon la rev. indépendante 8, comprenant :
- une optique ;
- un capteur numérique comprenant une pluralité d'éléments photosensibles ;
- un module de mise au point adapté à faire varier le focus de l'optique sur le capteur ; et
- une unité de traitement électronique
ladite unité de traitement électronique étant adaptée à déterminer :
- une variation de grandissement entre deux images numériques capturées successivementprovenant d'une variation de focus de l'optique ;
- une compensation numérique de ladite variation de grandissement ;
ladite unité de traitement électronique étant en outre adaptée à appliquer un traitement numérique à au moins une des deux images numériques capturées successivement en fonction de ladite compensation déterminée.

Selon les modes de réalisation, le système de capture d'une séquence d'images numériques selon l'invention peut comprendre en outre une ou plusieurs des caractéristiques suivantes :
- l'optique est à focale fixe ;
- l'optique est à focale variable ;
- l'unité électronique est adaptée à déterminer la variation de grandissement par analyse numérique d'au moins une des deux images numériques capturées successivement ;
- le module de mise au point est un module d'autofocus ;
- l'unité électronique est adaptée à déterminer une variation de position du module d'autofocus ;
- une table de calibration associant une position du module d'autofocus à une valeur de grandissement ;
- l'unité électronique est en outre adaptée à imposer une variation defocus entre deux images numériques capturées successivement ;
- l'unité électronique est adaptée à imposer la variation de focus en continu pendant la capture des images numériques ;
- l'unité électronique est adaptée à imposer la variation de focus par oscillation de la position du module d'autofocus autour d'une position de référence courante.

Le système de l'invention est peu onéreux et peu encombrant ; il peut donc être incorporé à moindre coût dans des appareils de petites dimensions. Un tel système permet néanmoins une compensation efficace des effets visuels dus aux changements de grandissements entre deux images capturées successivement. Le système permet également une variation de focus en continu pour assurer une mise au point rapide et non visible pour l'utilisateur sur la scène à imager,

L'invention concerne en autre un téléphone mobile, ordinateur ou tablette numérique selon la rev. indépendante 15.

L'invention trouve à s'appliquer notamment dans les appareils grand publics tels que téléphones mobiles, ordinateurs, appareil photos, camescopes, téléviseurs, consoles de jeu et/ou tablettes numériques incluant un système de capture d'images et/ou de séquences d'images numériques. L'invention trouve aussi à s'appliquer dans des systèmes multi caméras, notamment pour des applications 3D. L'invention trouve aussi à s'appliquer dans les appareils professionnels notamment d'imagerie médicale ou de vidéosurveillance.

L'invention concerne aussi un support de stockage (disque dur ou autre) contenant une séquence d'image capturée selon le procédé de l'invention.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma d'un système de capture d'images selon un mode de réalisation de l'invention ;
- la figure 2 illustre les étapes du procédé de capture d'images selon un mode de réalisation de l'invention ;
- la figure 3 illustre schématiquement une calibration des variations de grandissement en fonction de la position du module d'autofocus ;
- la figure 4 illustre schématiquement les variations de netteté d'une image en fonction de la position du module d'autofocus.

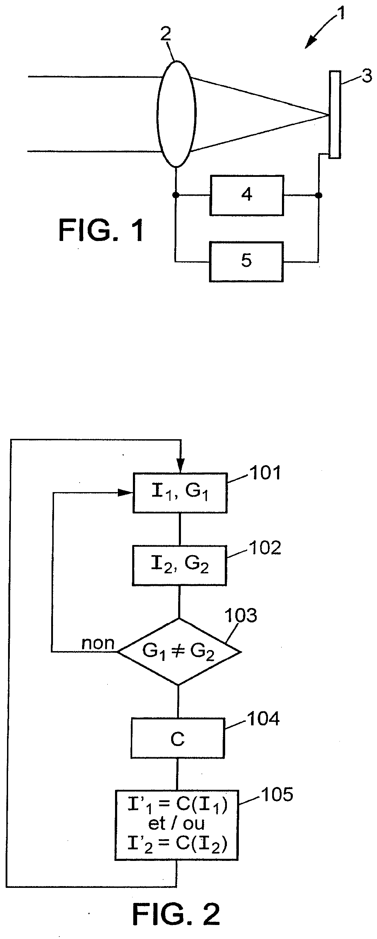

Sur la figure 1 est représenté un système 1 de capture de séquences d'images selon un mode de réalisation de l'invention.

Le système de capture de séquences d'images 1 comporte une optique 2, un capteur 3, un module de mise au point 4 et une unité de traitement électronique 5. Le système de capture de séquences d'images 1 peut comporter d'autres éléments connus en soit et qui ne seront pas décrits en détails ci-dessous, telle qu'une mémoire et des moyens de transmission des images capturées par exemple. Le « module de mise au point » sera plus loin désigné comme un « module d'autofocus » 4, mais il est entendu que l'invention trouve également à s'appliquer lorsque le module de mise au point est purement manuel.

Le capteur 3 est doté d'éléments sensibles permettant de convertir un flux de photons en signal électrique. Selon les modes de réalisation considérés, les éléments sensibles du capteur 3 peuvent avoir une sensibilité noir et blanc ou en deux couleurs, trois couleurs ou plus.

L'optique 2 comprend un ou plusieurs éléments parmi notamment des lentilles, des miroirs et/ou des éléments diffractifs. Dans le cadre de l'invention, l'optique peut être à focale variable afin de permettre la capture d'images avec différentes valeurs de zoom, ou être à focale fixe. Un système avec une optique à focale fixe est mieux adapté à être incorporé à moindre coût dans un appareil de petites dimensions tel qu'un téléphone mobile par exemple.

Le système 1 comprend aussi un module d'autofocus 4 adapté pour modifier la focalisation de l'optique 2 sur le capteur 3. L'optique 2 du système est à grandissement variable, c'est-à-dire que le rapport entre la taille de l'image d'un objet à travers l'optique et la taille réelle de l'objet dans la scène peut varier, notamment sous l'action du module d'autofocus 4 sans que cela provienne d'un éloignement ou d'un rapprochement de l'objet.

Une variation de focus peut être obtenue à l'aide d'un actuateur, de technologie voice coil, moteur pas à pas, dispositif piezo électrique, MEMS (Microelectromechanical systems), USM (Ultra Sonic Motor) ou tout autre moyen permettant de déplacer l'optique et/ou le capteur, ou encore pour effectuer des déplacements d'éléments à l'intérieur de l'optique, ou en utilisant des lentilles liquides ou tout autre moyen électrique, mécanique et/ou magnétique permettant de modifier les formes et/ou les positions des éléments constituant l'optique, de manière à ce que le capteur soit dans le plan de focalisation de l'image de la scène capturée. L'utilisation d'un dispositif de modulation de phase à cristaux liquides (DPLC) est un autre exemple de modification des propriétés du système optique permettant de modifier le grandissement. Selon l'invention on appelle la position du dispositif de mise au point ou de l'autofocus toute consigne, mesure ou grandeur liée au focus par exemple la position physique en cas de déplacement, mais aussi un courant, une tension ou une valeur numérique, ou la position de meilleure netteté par rapport au plan du capteur.

Il a été observé qu'une variation de focus peut engendrer une variation de grandissement de l'objet capturé à travers l'optique. Ainsi, lors de la capture d'une séquence d'images, le grandissement d'un même objet de la scène peut être différent d'une image à l'autre de la séquence, sans que cette variation provienne d'un changement de focale de l'optique. Notamment, une variation de focus entre deux images successives, lors de la mise au point du système sur la scène à imager, peut induire une variation de grandissement désignée comme un effet de « pompage », ou « lens breathing » en anglais.

Le système 1 de capture d'image selon l'invention permet ainsi de capturer une première image avec une première valeur de grandissement et une deuxième image avec une deuxième valeur de grandissement, sans forcément que la focale de l'optique 2 ait été modifiée. Par exemple, la variation de grandissement entre les deux images peut être due à une variation de focus pour une mise au point de la scène à imager.

Le système 1 de capture d'image selon l'invention comprend en outre une unité de traitement électronique 5. L'unité de traitement électronique 5 est en mesure d'associer à chaque image capturée une valeur de grandissement. L'unité de traitement électronique 5 est également en mesure de discriminer si une variation de grandissement entre deux images capturées provient d'une variation de focale de l'optique 2 (un zoom commandé le cas échéant), ou d'une variation de focus pour une mise au point de la scène à imager. En particulier, l'ampleur d'au moins une consigne de déplacement et/ou d'au moins une mesure de déplacement dans l'optique et/ou le capteur peut permettre de discriminer une variation de focale d'une variation de focus. Typiquement, une variation de focus peut être assurée par des déplacements relatifs optique/capteur de quelques micromètres provoquant des variations de grandissement de 1 % à 5% environ alors qu'une variation de focale nécessite des déplacements relatifs optique/capteur de quelques millimètres pouvant provoquer des variations de grandissement supérieures à 300%.

L'unité de traitement électronique 5 peut être couplée au module d'autofocus 4 ; elle peut alors déterminer des valeurs de grandissement en fonction de la position du module d'autofocus et d'une table de calibration. Alternativement, l'unité de traitement électronique 5 peut être complètement découplée du module d'autofocus 4; elle peut alors déterminer des valeurs de grandissement par analyse numérique des images, notamment par les méthodes d'estimation de mouvement connues de l'homme de l'art telles que des corrélations.

L'unité de traitement électronique 5 est ainsi adaptée à déterminer une variation de grandissement entre deux images successives d'une séquence et à déterminer si cette variation est due à une autre cause qu'une variation de focale, notamment due à une variation de focus. L'unité de traitement électronique 5 peut alors déterminer une compensation numérique de la variation de grandissement et traiter numériquement l'une et/ou l'autre des images de la séquence de façon à compenser l'effet visuel de la variation de grandissement, en particulier lors d'une variation de focus.

L'unité de traitement électronique 5 peut comprendre des moyens logiciels et/ou matériels utilisés pour compenser l'effet visuel de la variation de grandissement, tels que notamment une unité de zoom numérique, et/ou un processeur graphique permettant d'appliquer des déformations à une image (« warping » en anglais) et/ou un processeur général et/ou un processeur de traitement d'images et/ou un processeur de traitement du signal. La compensation de grandissement peut consister en l'application d'une homographie, chaque pixel de l'image numérique traitée étant obtenu par interpolation notamment bilinéaire ou bicubique de pixels de l'image numérique à traiter.

Le système de capture d'images 1 est adapté pour mettre en oeuvre les étapes suivantes décrites en référence à la figure 2.

Le système capture une première image numérique I₁ avec une première valeur de grandissement G₁ (étape 101). Cette première image I₁ est capturée avec une position donnée du module d'autofocus à laquelle correspond un grandissement donné G₁ entre la taille de l'image I₁ à travers l'optique et la taille réelle de l'objet dans la scène.

Le système capture une deuxième image numérique I₂ avec une deuxième valeur de grandissement G₂ (étape 102). Cette deuxième image I₂ est capturée avec une position donnée du module d'autofocus à laquelle correspond un grandissement donné G₂ entre la taille de l'image I₂ à travers l'optique et la taille réelle de l'objet dans la scène.

L'invention trouve à s'appliquer lorsque la deuxième valeur de grandissement G₂ est différente de la première valeur de grandissement G₁ et plus spécifiquement lorsque la variation entre lesdites valeurs de grandissement G₁ et G₂ provient d'une autre cause qu'une variation de focale de l'optique, telle qu'une variation de focus de l'optique sur la scène à imager. Si l'unité électronique du système détecte une différence entre les valeurs de grandissement G₁ et G₂ des deux images capturées successivement (étape 103), elle détermine une compensation numérique C de la variation de grandissement (étape 104). La manière dont l'unité électronique détermine la compensation numérique C sera décrite plus en détails plus bas.

L'unité électronique du système applique alors un traitement numérique (étape 105) à la première image numérique et/ou à la deuxième image numérique en fonction de ladite compensation déterminée de sorte que la variation entre lesdites valeurs de grandissement soit compensée pour devenir invisible ou moins visible. La première image numérique I₁ peut donc être modifiée par traitement numérique postérieurement à sa capture en une image numérique I₁' présentant un grandissement différent de l'image initiale. La première image numérique traitée I₁' est fonction de la compensation C déterminée appliquée à la première image : I₁'=C(I₁).De même, la deuxième image numérique I₂ peut également ou alternativement être modifiée par traitement numérique postérieurement à sa capture en une image numérique I₂' présentant un grandissement différent de l'image initiale. La deuxième image numérique traitée I₂' est fonction de la compensation C déterminée appliquée à la deuxième image : I₂'=C(I₂).

La compensation numérique C appliquée à la première et/ou à la deuxième image numérique I₁, I₂ permet de compenser les effets visuels dus aux variations de grandissement provoquées notamment par des variations de focus entre la première image et la deuxième image. On peut ainsi atténuer, voire éliminer, les effets de « pompage » lors de la capture d'une séquence d'images vidéo. Cette compensation numérique C est déterminée et le traitement est appliqué en continu lors de la capture d'une séquence d'images dèsqu'une différence entre les valeurs de grandissement G₁ et G₂ de deux images capturées successivement est détectée (comme l'illustrent les flèches retours sur l'ordinogramme de la figure 2).

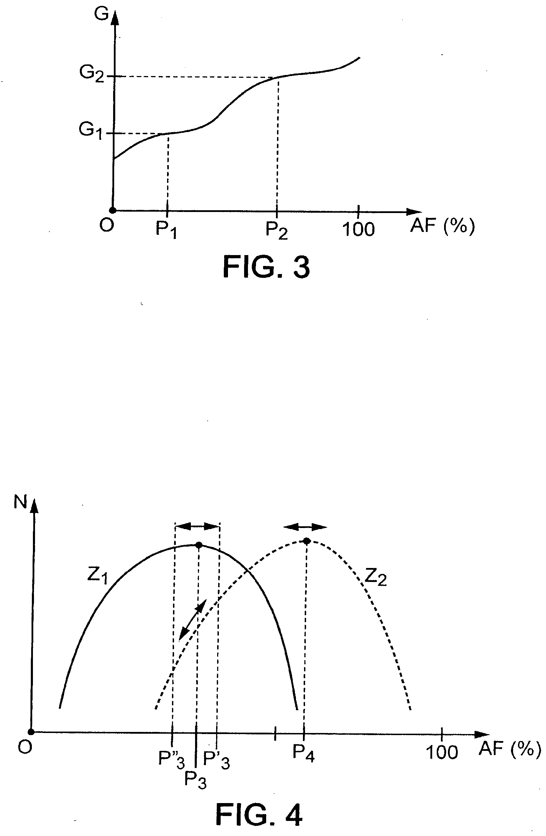

La compensation numérique C de la variation de grandissement entre deux images successives peut être réalisée de différentes façons. Par exemple, un ou plusieurs paramètres de la compensation numérique de la variation de grandissement peuvent être déterminés par calibration. La calibration consiste à associer à chaque position d'autofocus une valeur de grandissement, stockée dans une table de valeurs. Cette association peut par exemple être déduite de mesures, ou encore à partir du design optique. Une table de calibration peut être incluse dans la mémoire du système de capture d'images. Une telle table de calibration peut répertorier des valeurs de grandissement pour chaque position du module d'autofocus. La figure 3 illustre un tel mode de réalisation ; aux positions respectives P₁, P₂ du module d'autofocus correspondent respectivement des grandissements G₁, G₂. Avec une telle table de calibration, la commande d'une position du module d'autofocus pour chaque image permet de déterminer les valeurs de grandissement respectif de chaque image capturée. La compensation numérique C de grandissement peut alors consister à appliquer un grandissement G_{REF}/G₁, G_{REF}/G₂respectivement, ce qui permet de recréer des images avec un grandissement de référence G_{REF}. La table de calibration peut dans un autre exemple comprendre les grandissements à appliquer pour diverses positions P₁, P₂.

La compensation numérique C peut aussi être déterminée par analyse numérique de la première image et/ou analyse numérique de la deuxième image. Par exemple, la variation de grandissement entre deux images peut être analysée, par corrélation par exemple. Une telle analyse par corrélation peut consister à découper l'image en une pluralité de blocs, calculer le déplacement local d'une image à la suivante pour chaque bloc et à calculer le modèle de variation de grandissement (homothétie) permettant d'expliquer globalement au mieux la pluralité de déplacements locaux. D'autres méthodes, tel le flot optique sont également utilisables pour analyser numériquement les variations de grandissement entre deux images. Dans le cas d'une optique avec focale variable, il convient d'enlever la variation de grandissement due à la variation de focale. On s'attend par exemple à ce que le rapport du grandissement et de la focale soit constant, soit G1/f1=G2/f2, lorsque G1, f1, G2 et f2 correspondent respectivement au grandissement et à la focale dans la première et la seconde image. Cette équation montre qu'une variation de grandissement (G2/G1)*(f1/f2) ne peut pas être attribuée à un changement de focale et peut être compensée, car interprétée comme du « pompage ». L'homme de l'art notera que s'il est difficile de connaître le grandissement de manière absolue, la variation de grandissement G2/G1 peut en revanche être déterminée par des traitements numériques.

Selon les modes de mise en oeuvre, la compensation numérique C peut alors être déterminée comme le ratio entre les valeurs de grandissement G₁, G₂ des deux images successives ou comme une moyenne de cette différence ou encore comme une moyenne pondérée de cette différence ou encore comme une différence avec une valeur donnée fixe de grandissement G. Une fois la compensation numérique C déterminée, l'unité électronique peut alors traiter la première image pour la ramener sensiblement au grandissement de la deuxième image ou traiter la deuxième image pour la ramenersensiblement au grandissement de la première image, ou encore traiter chacune des première et deuxième images pour les amener chacune à une valeur de grandissementmédiane ou prédéterminée. Ce traitement numérique postérieur à la capture des images permet de compenser les effets visuels de « pompage » sans nécessiter une optique complexe et sans affecter le débit d'images capturées.

La compensation numérique des variations de grandissement entre deux images capturées successivement dans une séquence permet également de maintenir le module d'autofocus actif pendant l'acquisition continue d'une séquence d'images numériques. Il est notamment possible d'autoriser des variations de focus quasi permanentes sur la scène à imager afin de permettre une mise au point rapide lors d'un changement de scène.

En effet, comme expliqué plus haut, dans un système de mise au point par itérations successives, le système ne sait pas dans quel sens régler la focalisation du système optique avant une première itération lorsqu'une image est hors focus.

L'invention propose de faire varier la position de focus de l'optique 2 entre deux images numériques capturées successivement, avec une variation inférieure ou égale à une valeur prédéterminée - de l'ordre de quelques microns. De telles variations de la position de focus de l'optique permettent d'estimer continûment la netteté de l'image capturée et permettent de déterminer sans hésitation la modification à apporter à la focalisation de l'optique lors d'un changement de scène.

La figure 4 illustre un tel mode de réalisation avec un graphe montrant que pour chaque scène, la netteté d'une image est fonction de la position du module d'autofocus du système. Pour une première scène donnée Z₁, une image aura une netteté optimale pour une position P₃ du module d'autofocus.Pour une deuxième scène donnée Z₂, une image aura une netteté optimale pour une position P₄ du module d'autofocus. Lorsque le système de capture d'images passe de la première scène Z₁ à la deuxième scène Z₂, la netteté diminue brutalement tant que la position du module d'autofocus n'a pas été modifiée. Afin de permettre un ajustement rapide du focus lors d'un changement de scène, l'invention propose de commander des variations de focus autour d'une position de référence courante. Cette position de référence courante est celle identifiée par le système comme celle de la mise au point optimale. On fera bien la distinction entre la position courante de l'autofocus et la position de référence courante. La position de référence courante peut-être actualisée, par exemple si on trouve une position de meilleure netteté. On notera cependant qu'elle est souvent différente de la position courante de l'autofocus, puisque la présente invention propose d'osciller autour de la position de référence courante.

Ainsi, pour la première scène Z₁, la position du module d'autofocus va osciller entre les positions P₃' et P₃" autour de la position de référence courante P₃. L'unité électronique détermine la netteté de l'image pour chaque position d'oscillation P₃' et P₃".La mesure de netteté de chaque image peut se faire selon toute méthode connue. Ainsi, tant que la scène capturée correspond à la scène Z₁, l'unité électronique détermine que les positions P₃' et P₃" correspondent à des nettetés moindres que la position de référence courante P₃.

Lorsque le système de capture d'images passe de la première scène Z₁ à la deuxième scène Z₂, la position de référence courante P₃ ne correspond plus à une position de netteté optimale. De par la variation de netteté mesurée lors de l'oscillation entre les positions P₃' et P₃", l'unité électronique est en mesure de déterminer immédiatement que la scène a changé et dans quelle direction ajuster la position courante du module d'autofocus pour retrouver plus rapidement une netteté optimale sur la deuxième scène Z₂, de mettre à jour la position de référence courante,et ensuite osciller autour de la nouvelle position de référence courante du module autofocus. Pour retrouver une netteté optimale sur la deuxième scène Z₂une fois la direction déterminée, les méthodes connues de l'homme de l'art peuvent être employées notamment la méthode consistant à modifier de la position de l'autofocus, mesurer la netteté relative avec l'image précédente et itérer jusqu'à la netteté optimale.

Sur la figure 4, les scènes Z₁ et Z₂ sont illustrées comme étant très différentes l'une de l'autre afin de faciliter la lecture de la figure. Néanmoins, lors de la capture d'une séquence d'images numériques, il est fréquent que la scène varie légèrement, par exemple suite au déplacement d'au moins un objet dans la scène et/ou au déplacement de l'utilisateur du système de capture d'images, et que la position de référence courante de l'autofocus ne soit plus la position de netteté optimale. L'oscillation continue entre les positions P₃' et P₃" autour de la position de référence courante P₃ permet de détecter ces situations afin d'optimiser continument la netteté des images capturées. Ceci permet une réactivité instantanée, alors que dans un système traditionnel, pour éviter les effets de pompage, on attend une variation importante de netteté pendant par exemple plusieurs centaines de millisecondes avant d'ajuster la position du dispositif de mise au point.

Les variations de position du module d'autofocus autour de la position de référence courante sont contraintes, c'est-à-dire imposées par l'unité électronique du système de capture d'image sans être nécessitées par les besoins d'une mise au point de l'image. Les variations de position du module d'autofocus autour de la position de référence courante sont continues, c'est-à-dire qu'elles ne sont pas interrompues lors de la capture des images numériques d'une même séquence.

Ces variations de position du module d'autofocus sont limitées en amplitudes afin de limiter l'impact visuel sur les images capturées tout en étant suffisamment importantes pour permettre une mesure de netteté relative. Par exemple, des oscillations de l'ordre de 10 microns autour de la position de référence courante peuvent permettre à un algorithme de mesurer une variation de netteté sans que cette variation soit perceptible à l'oeil. Par ailleurs, l'unité électronique peut appliquer en outre un traitement numérique aux images capturées pour compenser les variations de netteté, par exemple en appliquant des filtres de rehaussement dont l'intensité est adaptée à la variation de focalisation. Dans une autre réalisation, on peut aussi transporter la netteté de l'image la plus nette sur l'image la plus floue, en copiant le résultat de l'image la plus nette par un filtre passe-haut sur l'image la plus floue. L'unité de traitement peut également appliquer en outre un traitement numérique aux images capturées pour compenser les variations de distorsion optique lors des variations de position du module d'autofocus, par exemple en appliquant une déformation locale à l'image pour supprimer les distorsions en fonction d'un champ de distorsion mesuré par calibration pour diverses valeurs de focale et focus.

Les variations de position du module d'autofocus provoquent des variations de focus qui peuvent provoquer des variations de grandissement entre les images successives capturées. Ces variations de grandissement pourront être compensées par le procédé de l'invention décrit plus haut.

La présente invention permet donc de maintenir l'autofocus actif lors de la capture d'une séquence d'images afin d'assurer une mise au point rapide lors d'un changement de scène, tout en éliminant les effets visuels de « pompage » et tout en conservant l'ensemble des images capturées pour une restitution fluide des vidéos.

L'invention trouve à s'appliquer dans tout type de système de capture d'images, mais plus spécifiquement dans un appareil grand public et/ou de petites dimensions avec lequel on cherche néanmoins à réaliser des séquences vidéo, comme par exemple un téléphone mobile, un ordinateur, un appareil photos, une console de jeu ou une tablette numérique. L'invention trouve également à s'appliquer dans des appareils de types professionnels notamment d'imagerie médicale ou de vidéosurveillance, dans des caméscopes ou appareils reflexes ainsi que dans des systèmes multi caméras pour des acquisitions vidéo en vu de reconstruire des scènes en trois dimensions.

## Revendications

1. Procédé de capture d'une séquence d'images numériques comprenant les étapes consistant à :
- imager une scène sur un capteur numérique (3) à travers une optique (2), avec au moins une première valeur de grandissement et au moins une deuxième valeur de grandissement, la deuxième valeur de grandissement étant différente de la première valeur de grandissement et la variation entre lesdites valeurs de grandissement provenant d'une variation de focus de l'optique;
- capturer une première image numérique avec la première valeur de grandissement (I₁, G₁) ;
- capturer une deuxième image numérique avec la deuxième valeur de grandissement (I₂, G₂) ;
- déterminer une compensation numérique (C) de la variation entre lesdites valeurs de grandissement ;
- appliquer un traitement numérique à la première image numérique et/ou à la deuxième image numérique en fonction de ladite compensation numérique déterminée de sorte que la variation entre lesdites valeurs de grandissement soit compensée pour devenir invisible ou moins visible.

2. Procédé de capture d'une séquence d'images numériques selon la revendication 1, dans lequel un ou plusieurs paramètres de la compensation numérique de la variation de grandissement sont prédéterminés par calibration.

3. Procédé de capture d'une séquence d'images numériques selon la revendication 1, dans lequel la compensation numérique de la variation de grandissement est déterminée en fonction d'une analyse numérique de la première image numérique et/ou de la deuxième image numérique.

4. Procédé de capture d'une séquence d'images numériques selon l'une quelconque des revendications précédentes, dans lequel le traitement numérique consiste à appliquer une variation corrective de grandissement à la première image numérique et/ou à la deuxième image numérique en fonction de ladite compensation numérique déterminée.

5. Procédé de capture d'une séquence d'images numériques selon l'une quelconque des revendications précédentes, dans lequel la première image numérique et la deuxième image numérique sont deux images consécutives de la séquence d'images numérique.

6. Procédé de capture d'une séquence d'images numériques selon l'une quelconque des revendications précédentes, dans lequel le focus varie d'une image à la suivante pour chaque image de la capture de la séquence d'images.

7. Procédé de capture d'une séquence d'images numériques selon la revendication 6, comprenant en outre une étape consistant à mesurer une netteté de chaque image capturée, et dans lequel la variation de focus d'une image à l'autre consiste à osciller autour d'une position de référence courante de focus, la position de référence courante de focus étant en outre ajustée en fonction de la netteté mesurée.

8. Système de capture de séquences d'images numériques (1) comprenant :
- une optique (2) ;
- un capteur numérique (3) comprenant une pluralité d'éléments photosensibles ;
- un module de mise au point (4) adapté à faire varier le focus de l'optique (2) sur le capteur (3) ; et
- une unité de traitement électronique (5),
ladite unité de traitement électronique étant adaptée à déterminer :
- une variation de grandissement (G₁, G₂) entre une première et une deuxième images numériques (I₁, I₂) capturées, la variation de grandissement provenant d'une variation de focus de l'optique ;
- une compensation numérique de ladite variation de grandissement ; et ladite unité de traitement électronique étant en outre adaptée à appliquer un traitement numérique à au moins une des deux images numériques capturées en fonction de ladite compensation déterminée de sorte que la variation entre lesdites valeurs de grandissement soit compensée pour devenir invisible ou moins visible.

9. Système de capture de séquences d'images numériques selon la revendication 8, dans lequel l'optique (2) est à focale fixe.

10. Système de capture de séquences d'images numériques selon la revendication 8, dans lequel l'optique (2) est à focale variable.

11. Système de capture de séquences d'images numériques selon l'une des revendications 8 à 10, dans lequel le module de mise au point (4) est un module d'autofocus, et
dans lequel l'unité électronique est adaptée à déterminer une variation de position du module d'autofocus.

12. Système de capture de séquences d'images numériques selon la revendication 11, comprenant en outre une table de calibration associant une position du module d'autofocus à une valeur de grandissement.

13. Système de capture de séquences d'images numériques selon l'une des revendications 10 à 12, dans lequel l'unité électronique est en outre adaptée à imposer une variation de focus entre deux images numériques capturées successivement, la variation de focus étant imposée en continu pendant la capture des images numériques.

14. Système de capture de séquences d'images numériques selon la revendication 13, dans lequel l'unité électronique est adaptée à imposer la variation de focus par oscillation de la position du module d'autofocus autour d'une position de référence courante.

15. Téléphone mobile, ordinateur ou tablette numérique comprenant un système de capture de séquences d'images numériques selon l'une des revendications 8 à 14.

## Patentansprüche

1. Verfahren zur Aufnahme einer Folge von digitalen Bildern, aufweisend die folgenden Schritte:
- Abbilden einer Szene auf einen digitalen Detektor (3) über eine Optik (2) mit mindestens einem ersten Vergrößerungswert und mindestens einem zweiten Vergrößerungswert, wobei der zweite Vergrößerungswert sich von dem ersten Vergrößerungswert unterscheidet und die Variation zwischen den Vergrößerungswerten ihren Ursprung in einer Fokusvariation der Optik hat;
- Aufnehmen eines ersten digitalen Bildes mit dem ersten Vergrößerungswert (I₁, G₁);
- Aufnehmen eines zweiten digitalen Bildes mit dem zweiten Vergrößerungswert (I₂, G₂);
- Bestimmen einer digitalen Kompensation (C) der Variation zwischen den Vergrößerungswerten;
- Anwenden einer digitalen Verarbeitung auf das erste digitale Bild und/oder das zweite digitale Bild als Funktion der digitalen Kompensation, die derart bestimmt wird, dass die Variation zwischen den Vergrößerungswerten so kompensiert wird, um unsichtbar oder weniger sichtbar zu werden.

2. Verfahren zur Aufnahme einer Folge von digitalen Bildern nach Anspruch 1, in welchem ein oder mehrere Parameter der digitalen Kompensation der Vergrößerungsvariation vorab durch Kalibration bestimmt werden.

3. Verfahren zur Aufnahme einer Folge von digitalen Bildern nach Anspruch 1, in welchem die digitale Kompensation der Vergrößerungsvariation als Funktion einer numerischen Analyse des ersten digitalen Bildes und/oder des zweiten digitalen Bildes bestimmt wird.

4. Verfahren zur Aufnahme einer Folge von digitalen Bildern nach einem der vorstehenden Ansprüche, in welchem die digitale Verarbeitung darin besteht, eine korrigierende Vergrößerungsvariation auf das erste digitale Bild und/oder auf das zweite digitale Bild als Funktion der bestimmten digitalen Kompensation anzuwenden.

5. Verfahren zur Aufnahme einer Folge von digitalen Bildern nach einem der vorstehenden Ansprüche, in welchem das erste digitale Bild und das zweite digitale Bild zwei aufeinanderfolgende Bilder der Folge von digitalen Bildern sind.

6. Verfahren zur Aufnahme einer Folge von digitalen Bildern nach einem der vorstehenden Ansprüche, in welchem für jedes Bild der Aufnahme der Bildfolge der Fokus von einem Bild zum nächsten variiert.

7. Verfahren zur Aufnahme einer Folge von digitalen Bildern nach Anspruch 6, aufweisend ferner einen Schritt, der darin besteht, eine Schärfe jedes aufgenommenen Bildes zu messen, und in welchem die Fokusvariation von einem Bild zum anderen darin besteht, um eine aktuelle Fokusreferenzposition herum zu oszillieren, wobei außerdem die aktuelle Fokusreferenzposition als Funktion der gemessenen Schärfe angepasst wird.

8. System zur Aufnahme von Folgen digitaler Bilder (1), aufweisend:
- eine Optik (2);
- einen digitalen Detektor (3), der mehrere lichtempfindliche Elemente aufweist;
- ein Scharfeinstellungsmodul (4), der angepasst ist, den Fokus der Optik (2) auf den Detektor (3) zu variieren; und
- eine elektronische Verarbeitungseinheit (5),
wobei die elektronische Verarbeitungseinheit angepasst ist, zu bestimmen:
- eine Vergrößerungsvariation (G₁, G₂) zwischen einem ersten und einem zweiten aufgenommenen digitalen Bild (I₁, I₂), wobei die Vergrößerungsvariation ihren Ursprung in einer Fokusvariation der Optik hat;
- eine digitale Kompensation der Vergrößerungsvariation; und
wobei die elektronische Verarbeitungseinheit außerdem angepasst ist, eine digitale Verarbeitung auf mindestens eines der zwei aufgenommenen digitalen Bilder als Funktion der Kompensation anzuwenden, die derart bestimmt wird, dass die Variation zwischen den Vergrößerungswerten so kompensiert wird, um unsichtbar oder weniger sichtbar zu werden.

9. System zur Aufnahme von Folgen digitaler Bilder nach Anspruch 8, in welchem die Optik (2) eine Optik mit fester Brennweite ist.

10. System zur Aufnahme von Folgen digitaler Bilder nach Anspruch 8, in welchem die Optik (2) eine Optik mit variabler Brennweite ist.

11. System zur Aufnahme von Folgen digitaler Bilder nach einem der Ansprüche 8 bis 10, in welchem das Scharfeinstellungsmodul (4) ein Autofokusmodul ist, und in welchem die elektronische Einheit angepasst ist, eine Positionsvariation des Autofokusmoduls zu bestimmen.

12. System zur Aufnahme von Folgen digitaler Bilder nach Anspruch 11, ferner aufweisend eine Kalibrationstabelle, die eine Position des Autofokusmoduls mit einem Vergrößerungswert verknüpft.

13. System zur Aufnahme von Folgen digitaler Bilder nach einem der Ansprüche 10 bis 12, in welchem die elektronische Einheit außerdem angepasst ist, zwischen zwei der Reihe nach aufgenommenen digitalen Bildern eine Fokusvariation zu erzwingen, wobei die Fokusvariation kontinuierlich während der Aufnahme der digitalen Bilder erzwungen wird.

14. System zur Aufnahme von Folgen digitaler Bilder nach Anspruch 13, in welchem die elektronische Einheit konfiguriert ist, die Fokusvariation zu erzwingen durch Oszillation der Position des Autofokusmoduls um eine aktuelle Referenzposition herum.

15. Mobiltelefon, Computer oder digitales Tablet aufweisend ein System zur Aufnahme von Folgen digitaler Bilder nach einem der Ansprüche 8 bis 14.

## Claims

1. Method for capturing a sequence of digital images, comprising the steps of:
- imaging a scene on a digital sensor (3), through a lens unit (2), with at least one first magnification value and at least one second magnification value, the second magnification value being different from the first magnification value and the variation between said magnification values arising from a variation in focus of the lens unit;
- capturing a first digital image with the first magnification value (I₁, G₁);
- capturing a second digital image with the second magnification value (I₂, G₂);
- determining a digital compensation (C) for the variation between said magnification values;
- applying digital processing to the first digital image and/or to the second digital image, based on said digital compensation determined so that the variation between said magnification values is compensated for and becomes invisible or less visible.

2. Method for capturing a sequence of digital images according to claim 1, wherein one or more parameters of the digital compensation for the variation in magnification are predetermined by calibration.

3. Method for capturing a sequence of digital images according to claim 1, wherein the digital compensation for the variation in magnification is determined based on digital analysis of the first digital image and/or of the second digital image.

4. Method for capturing a sequence of digital images according to any of the preceding claims, wherein the digital processing consists in applying a corrective variation in magnification to the first digital image and/or to the second digital image, based on said determined digital compensation.

5. Method for capturing a sequence of digital images according to any of the preceding claims, wherein the first digital image and the second digital image are two consecutive images in the sequence of digital images.

6. Method for capturing a sequence of digital images according to any of the preceding claims, wherein the focus varies from one image to the next for each image in the capture of the sequence of images.

7. Method for capturing a sequence of digital images according to claim 6, further comprising a step of measuring a sharpness of each captured image, and wherein the variation in focus from one image to another consists of oscillating about a current focus reference position, the current focus reference position being additionally adjusted according to the measured sharpness.

8. System for capturing sequences of digital images (1), comprising:
- a lens unit (2);
- a digital sensor (3) comprising a plurality of light-sensitive elements;
- a focusing module (4) suitable for varying the focus of the lens unit (2) on the sensor (3), and
- an electronic processing unit (5),
said electronic processing unit being adapted to determine:
- a variation in magnification (G₁, G₂) between a first and second captured digital images (I₁, I₂), the variation in magnification arising from a variation in focus of the lens unit;
- a digital compensation for said variation in magnification; and
said electronic processing unit being further adapted to apply digital processing to at least one of the two captured digital images based on said determined compensation.

9. System for capturing sequences of digital images according to claim 8, wherein the lens unit (2) has a fixed focal length.

10. System for capturing sequences of digital images according to claim 8, wherein the lens unit (2) has a variable focal length.

11. System for capturing sequences of digital images according to one of claims 8 to 10, wherein the focusing module (4) is an autofocusing module, and
wherein the electronic processing unit is adapted for determining a change in position of the autofocusing module.

12. System for capturing sequences of digital images according to claim 11, further comprising a calibration table associating a position of the autofocusing module with a magnification value.

13. System for capturing sequences of digital images according to one of claims 10 to 12, wherein the electronic processing unit is further adapted for imposing a variation in focus between two successively captured digital images, the variation in focus being imposed continuously during the capture of digital images.

14. System for capturing sequences of digital images according to claim 13, wherein the electronic processing unit is adapted for imposing the variation in focus by oscillating the position of the autofocusing module about a current reference position.

15. Mobile phone comprising a system for capturing sequences of digital images according to one of claims 8 to 14.
